(19) Europäisches Patentamt
European Patent Office
Office européen des brevets

(11) **EP 2 187 276 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(51) Int Cl.:
**G05B 11/42** (2006.01)     **G05B 13/02** (2006.01)

(21) Anmeldenummer: **08019633.0**

(22) Anmeldetag: **10.11.2008**

(54) **Verfahren zum Ermitteln von Parameterwerten zum Regeln eines Zustandes eines Systems**

Method to determine the parameter values to control a system's status

Procédé de définition de valeurs de paramètres destinées au réglage de l'état d'un système

(84) Benannte Vertragsstaaten:
**DE FR GB IT**

(43) Veröffentlichungstag der Anmeldung:
**19.05.2010 Patentblatt 2010/20**

(73) Patentinhaber: **Siemens Aktiengesellschaft**
**80333 München (DE)**

(72) Erfinder:
• **Jahn, Uwe**
**04600 Altenburg (DE)**
• **Mantel, Martin**
**91452 Wilhermsdorf (DE)**
• **Müller, Georg**
**09669 Frankenberg (DE)**
• **Vogel, Thomas**
**09217 Burgstädt (DE)**

(56) Entgegenhaltungen:
**US-A- 4 549 123     US-A- 5 453 925**
**US-A- 6 081 751**

• **MENANI S ET AL: "Automatic tuning of multivariable controllers with adaptive relay feedback" DECISION AND CONTROL, 1996., PROCEEDINGS OF THE 35TH IEEE CONFERENCE O N KOBE, JAPAN 11-13 DEC. 1996, NEW YORK, NY, USA,IEEE, US, Bd. 4, 11. Dezember 1996 (1996-12-11), Seiten 4695-4700, XP010214085 ISBN: 978-0-7803-3590-5**

EP 2 187 276 B1

## Beschreibung

Die Erfindung betrifft ein Verfahren zum Ermitteln von Parameterwerten zum Regeln eines Zustands eines Systems gemäß dem Oberbegriff des Patentanspruchs 1. Ein solches Verfahren ist aus der Druckschrift US 5,453,925 bekannt. Die Erfindung betrifft auch einen Datenträger mit einem Programmcode gemäß dem Patentanspruch 7 und eine Regeleinheit nach dem Oberbegriff des Patentanspruchs 8.

Technische Systeme, wie z.B. Heizsysteme oder Antriebssysteme, können durch Regler automatisch in einen vorbestimmten Zustand gebracht und in diesem gehalten werden, auch wenn Störgrößen auf den Zustand des Systems einwirken. So kann ein Regler für ein Heizsystem die Temperatur eines Raumes einregeln und durch Variieren der Heizleistung konstant halten, auch wenn die Außentemperatur schwankt. Bei einem Antriebssystem kann durch einen Regler z.B. die Drehzahl eines Motors auf eine Solldrehzahl geregelt werden. Wird der Motor dabei durch ein zeitlich veränderliches Moment belastet, wirkt der Regler durch Variieren der Antriebsleistung dieser Störgröße entgegen und hält dadurch die Drehzahl des Motors auf der Solldrehzahl.

Um festzustellen, ob ein Zustand eines Systems von dem gewünschten Sollzustand abweicht, wird ein gemessener Istwert, also z.B. die Temperatur eines Raumes oder die Drehzahl eines Antriebs, mit einem entsprechenden Sollwert von dem Regler verglichen. Ergibt sich eine Differenz zwischen Istwert und Sollwert, muss eine Stelleinheit des Systems angesteuert werden, mittels der der Istwert nachgeführt wird. Bei einem Heizsystem wird beispielsweise die Heizleistung angepasst; bei einem Antriebssystem kann es die einem Motor zur Verfügung gestellte Antriebsleistung sein.

Zum Berechnen eines Stellwerts in Abhängigkeit von einer Differenz zwischen einem Istwert und einem Sollwert werden Regelverfahren wie z.B. die Proportional-Integral-Differential-Regelung (PID-Regelung) eingesetzt. Hierbei wird ein Stellwert zum Steuern einer Stelleinheit aus drei Anteilen berechnet. Ein proportionaler Anteil wird direkt durch Gewichten der beobachteten Differenz zwischen Istwert und Sollwert berechnet. Ein integraler Anteil wird als Integral der Differenz über der Zeit multipliziert mit einem Skalierungsfaktor berechnet. Schließlich bildet ein differentieller Anteil einen der zeitlichen Änderungsrate der Differenz proportionalen Anteil. Eine Regelung kann auch nur aspektweise von einem PID-Regler Gebrauch machen, z.B. einen P-Regler oder einen PI-Regler verwenden.

Damit eine Regelung einen Istwert möglichst schnell an einen Sollwert heranführen kann und anschließend stabil auf dem Sollwert halten kann, müssen Parameterwerte des Systems ermittelt werden und bei Berechnung der einzelnen Anteile bei beispielsweise einer PID-Regelung berücksichtigt werden. Solche Parameterwerte können zum einen die physikalischen Eigenschaften des Systems und zum anderen Eigenschaften betreffen, die sich aus dem Zusammenwirken der Regelungseinrichtung und dem geregelten System ergeben. Bei einem Heizsystem ist beispielsweise eine das Abkühlverhalten angebende Größe ein wichtiger Parameterwert, von dem beispielsweise abhängt, wie viel Heizleistung zur Verfügung gestellt werden muss, um eine erreichte Temperatur beibehalten zu können. Bei einem Antriebssystem geht die Massenträgheit eines Motors in die Berechnung von Anteilen bei einer PID-Regelung mit ein. Durch die Massenträgheit führt eine Veränderung der Antriebsleistung nur verzögert zu einer Änderung der Drehzahl. Dadurch kann es bei einer Regelung dazu kommen, dass nie der angestrebte Sollwert erreicht wird, sondern der zu regelnde Istwert periodisch um seinen Sollwert schwankt.

In der Druckschrift Uns 5,453,925 werden Parameterwerte für eine Regelung mittels der sogenannten Relay-Feedback-Methode ermittelt. Um diese Methode anwenden zu können wird eine Regelung zunächst durch Vorgeben von Parameterwerten soweit stabilisiert, dass sie den Istwert nahe an den Sollwert heranführen kann. Anschließend werden die den Zustand des Systems beeinflussenden Störgrößen konstant gehalten und der Stellwert abwechselnd größer bzw. kleiner als der zum Angleichen des Istwerts an den Sollwert benötigte Stellwert gewählt. Dadurch wird ein oszillierender Verlauf des Istwerts um den Sollwert erzwungen. Aus der Periodendauer des oszillierenden Verlaufs lassen sich Parameterwerte ablesen, die anschließend für eine Regelung genutzt werden. Diese mittels der Relay-Feedback-Methode ermittelten Parameterwerte beschreiben dabei das dynamische Verhalten des Systems, d.h. dessen Neigung zum Schwingen bei einer Änderung des Stellwerts.

In der Druckschrift US 4,549,123 wird ein Verfahren zum Ermitteln von Parameterwerten beschrieben, bei dem ähnlich wie bei der Relay-Feedback-Methode ein Oszillieren des Systems nach dem Verfahren von Ziegler und Nichols angeregt wird. Um dieses Verfahren auch für nicht-schwingungsfähige Systeme einsetzen zu können, wird dem Regler ein nicht-lineares Glied vorgeschaltet, das die gemessene Differenz zwischen Istwert und Sollwert über eine Sprungfunktion auf einen von zwei möglichen Werten abbildet.

Ein Nachteil bei den aus dem Stand der Technik bekannten Verfahren zum Ermitteln von Parameterwerten ist, dass ein Regler für deren Anwendung bereits soweit (manuell) vorkonfiguriert sein muss, dass der Istwert sehr nahe an den Sollwert herangeführt werden kann. Dies ist nötig, um feststellen zu können, welchen zeitlichen Mittelwert der Stellwert beim Anwenden bspw. der Relay-Feedback-Methode haben muss, damit der Istwert auch tatsächlich um seinen Sollwert oszilliert.

Es ist daher Aufgabe der vorliegenden Erfindung, ein Verfahren zum Ermitteln von Parameterwerten zum Regeln eines Zustands eines Systems bereitzustellen, das in der Lage ist, zumindest einige zum Regeln eines System benötigten Parameterwerte, die physikalische Eigenschaften eines Systems und Eigenschaften eines Regelkreises widerspiegeln, automatisch zu ermitteln.

Die Aufgabe wird durch ein durch die Merkmale des Patentanspruchs 1 gegebenes Verfahren gelöst. Zu der Erfindung gehören auch ein Datenträger mit einem Programmcode gemäß Patentanspruch 7 und eine Regeleinheit gemäß Patentanspruch 8. Vorteilhafte Ausführungsformen des erfindungsgemäßen Verfahrens sind durch die Unteransprüche gegeben.

Bei dem erfindungsgemäßen Verfahren zum Ermitteln von Parameterwerten zum Regeln eines Zustand eines Systems werden zu Zeitpunkten einer durch einen vorbestimmten Zeittakt vorgegebenen Folge (also einem zeitdiskreten System) jeweils ein den momentanen Zustand des Systems beschreibender, gemessener Istwert sowie eine zu dem Istwert vorgebbarer Sollwert entgegengenommen und ein Stellwert ausgegeben, der geeignet ist, eine den Zustand des Systems beeinflussende Stelleinheit zu steuern. Dabei sind kennzeichnende Schritte des erfindungsgemäßen Verfahrens:

a) Ausgeben eines konstanten Stellwertes für mehrere, aufeinanderfolgende Zeitpunkte und Überwachen eines zeitlichen Verlaufs der Istwerte, zumindest bis ein mathematischer Wendepunkt in dem zeitlichen Verlauf ermittelt wird;

b) anschließend für jeden Zeitpunkt jeweils Ausgeben eines Stellwertes, der in Abhängigkeit von einer momentanen Differenz zwischen dem jeweiligen Istwert und dem jeweiligen Sollwert berechnet wird, solange bis die momentane Differenz ein vorbestimmtes erstes Kriterium erfüllt;

c) danach für mehrere, aufeinanderfolgende Zeitpunkte jeweils Ausgeben eines von zwei vorgebbaren Stellwerten in Abhängigkeit von einer Differenz zwischen einem Istwert und einem Sollwert;

d) dabei Ermitteln von Zeitdauern für Intervalle, wobei für ein Intervall die Istwerte ein vorbestimmtes zweites Kriterium erfüllen.

Durch eine Regelung gemäß Schritt a) mit einem konstanten Stellwert, der bevorzugt nach einer Grenze eines Intervalls der für einen Betrieb der Stelleinheit erlaubten Stellwerte liegt, wird eine stetige Änderung des Istwerts bewirkt, wobei ein Graph des zeitlichen Verlaufs der Istwerte zunächst an Steilheit zunimmt und anschließend wieder abflacht. Dadurch bildet der Graph einen mathematischen Wendepunkt aus. Anhand dieses mathematischen Wendepunktes und dem aus dem Stand der Technik bekannten Wendetangentenverfahren können einige Parameterwerte, wie z.B. die sog. Totzeit des Systems, ermittelt werden. Die mittels des Wendetangentenverfahrens im Schritt a) ermittelten Parameterwerte sind dabei ausreichend, um einen Regler soweit zu konfigurieren, dass er im Schritt b) des erfindungsgemäßen Verfahrens mit einem Regelverfahren aus dem Stand der Technik den Istwert nahe an den Sollwert heranführen kann.

Der Erfindung liegt die Erkenntnis zugrunde, dass es allein auf Grundlage von anhand des Wendetangentenverfahrens ermittelten Parameterwerten möglich ist, einen Istwert eines Zustands eines Systems ausreichend genau an einen Sollwert heranzuführen, um die Voraussetzung für ein Anwenden der Relay-Feedback-Methode zu erfüllen. Insbesondere spielt es keine Rolle, wenn der Istwert im Schritt b) lediglich in der Weise an den Sollwert herangeführt werden kann, dass er um den Sollwert pendelt. Dies ist beispielsweise bei einem schwingungsfähigen System der Fall, dessen sogenannte dynamische, das Schwingungsverhalten beschreibende Parameterwerte erst anschließend durch Anwenden der Relay-Feedback-Methode ermittelt werden können. Für Schritt b) ist es ausreichend, wenn die Regelung vorgegebene dynamische Parameterwerte benutzt, die eine Pendelbewegung der Istwerte hinreichend genug dämpfen, um ein Aufschaukeln der Pendelbewegung zu verhindern. Bevorzugt werden die in Schritt b) verwendeten dynamischen Parameterwerte so gewählt, dass die Regelung dazu neigt, ein starkes Überschwingen des pendelnden Verlaufs über den Sollwert zu verhindern (kritische Dämpfung). Da die durch die Schritte c) und d) umgesetzte Relay-Feedback-Methode das einzuregelnde System ohnehin zum Oszillieren bringt, sind für Schritt b) genau passend definierte dynamische Parameterwerte entbehrlich.

Mit dem erfindungsgemäßen Verfahren lassen sich sämtliche für eine optimale, d.h. an das System angepasste Regelung eines Zustands eines Systems benötigten Parameterwerte automatisch ermitteln. Die für einen sicheren Betrieb des Systems mit dieser Regelung benötigten Informationen sind lediglich zwei Werteintervalle: Zum einen ist dies der Bereich, in dem sich die Stellwerte zum Steuern der Stelleinheit befinden dürfen, und zum anderen ist es der erlaubte Bereich der Istwerte. Anhand dieser von einem Benutzer leicht zu ermittelnden Angaben lässt sich ein sicherer Betrieb des Systems während eines Ausführens des Verfahrens gewährleisten.

Für den Fall, dass der Istwert bei Inbetriebnahme bereits sehr nahe an dem vorgegebenen Sollwert liegt, kann in einer Ausführungsform des erfindungsgemäßen Verfahrens vorgesehen sein, die Schritte a) und b) auszusetzen und gleich mittels der Schritte c) und d) Parameterwerte zu ermitteln.

Ein wichtiger Parameterwert ist die sogenannte statische Streckenverstärkung. Sie kann durch die folgenden Schritte zu beliebigen Zeitpunkten während der Regelung, bevorzugt jedoch während der obigen Schritte c) und d) ermittelt werden:

e1) zu einem vorgegebenen Sollwert Berechnen eines Mittelwerts aus einer Mehrzahl von aufeinanderfolgenden Istwerten und eines Mittelwerts aus einer Mehrzahl von aufeinanderfolgenden, ausgegebenen Stellwerten;

e2) Erzeugen eines abgeänderten Sollwertes und zu dem abgeänderten Sollwert Berechnen von Mittelwerten der in Schritt e1) genannten Art;

e3) Berechnen des Verhältnisses aus einer Differenz der Mittelwerte der Istwerte und einer Differenz der Mittelwerte der ausgegebenen Stellwerte.

Die statische Streckenverstärkung gibt an, welche Änderung des Istwerts sich bei einer vorgegebenen Änderung des Stellwerts ergibt. Durch die erfindungsgemäße Ermittlung nach den Schritten e1) bis e3) ergibt sich der Vorteil, dass der Einfluss von Messrauschen beim Erfassen von Istwerten durch Bilden von Mittelwerten unterdrückt wird. Für zeitkontinuierliche Größen ist eine Ausführungsform der erfindungsgemäßen Ermittlung der statischen Streckenverstärkung während eines Anwendens der Relay-Feedback-Methode durch folgende Gleichung gegenben:

$$K_s = \frac{\int\limits_{t_2}^{n_2 T + t_2} x(t)dt - \int\limits_{t_1}^{n_1 T + t_1} x(t)dt}{\int\limits_{t_2}^{n_2 T + t_2} y(t)dt - \int\limits_{t_1}^{n_1 T + t_1} y(t)dt} \ .$$

Danach berechnet sich die statische Streckenverstärkung $K_s$ als Verhältnis der Differenzen von durch Integrieren in ihrem Verlauf geglätteten Repräsentationen des Istwerts $x(t)$ und dazugehörigen ebenfalls durch Integrieren in ihrem Verlauf geglätteten Repräsentationen des ausgegebenen Stellwerts $y(t)$. Die Integrale werden dabei über zwei verschiedene Zeitintervalle gebildet. Das erste Intervall reicht von einem Zeitpunkt $t_1$ bis $t_1 + n_1 T$, wobei T die Periodendauer der Oszillation ist, die durch die Relay-Feedback-Regelung angeregt wird, und $n_1$ eine ganze Zahl ist. Entsprechend ist das zweite Intervall von $t_2$ bis $t_2 + n_2 T$ mit einer anderen ganzen Zahl $n_2$ gebildet. Etwaige Skalierungsfaktoren zum Bilden von Mittelwerten fallen bei der Berechnung von $K_s$ weg, da sie sich beim Bilden des Verhältnisses herauskürzen.
Das durch die Schritte e1) bis e3) gegebene Verfahren stellt eine eigenständige Erfindung dar, da es unabhängig von dem durch die Schritte a) bis d) gegebenen Verfahren durchführbar ist.
Um den Einfluss von Messrauschen beim Messen der physikalischen Größe, die den Istwert bildet, auch während des Anwendens der Relay-Feedback-Methode zu verringern, wird der Schritt c) des Ausgebens eines von zwei Stellwerten in vorteilhafter Weise durch die folgenden Schritte weitergebildet:

c11) zu einem Zeitpunkt Ausgeben des jeweils zum vorangegangenen Zeitpunkt ausgegebenen Stellwerts, wenn die Differenz und die Differenz zum vorangegangenen Zeitpunkt auf derselben Seite einer ersten Schaltgrenze liegen, und Wechseln des Stellwerts, wenn die Differenz und die Differenz zum vorangegangenen Zeitpunkt auf jeweils unterschiedlichen Seiten der ersten Schaltgrenze liegen;

c12) nach einem Wechsel des Stellwerts, Durchführen von Schritt c11) unter Ersetzen der ersten Schaltgrenze durch eine zweite Schaltgrenze, die der um einen Hysteresewert verschobenen ersten Schaltgrenze entspricht, solange bis der Betrag der Differenz größer als der Hysteresewert ist.

Durch die Schritte c11) und c12) wird eine im Folgenden als bedingte Hysterese bezeichnete Anpassung der Schaltgrenzen bereitgestellt. Im Unterschied zu einer Hysterese aus dem Stand der Technik weist die bedingte Hysterese den Vorteil auf, dass sie die Reaktion der Regelung auf eine für eine bestimmungsgemäße Regelung relevante Änderung des Istwerts nicht verzögert. Dies wird dadurch erreicht, dass zunächst auf Grundlage einer ersten Schaltgrenze, die bevorzugt eine für ein unverrauschtes System ideale Schaltgrenze ist, ermittelt wird, wann der auszugebende Stellwerte zu wechseln ist. Erst nach einem Wechsel wird eine Hysterese verwendet, für die eine zweite Schaltgrenze berechnet wird. Dadurch findet ein Wechsel der Stellwerte beim Überschreiten der ersten Schaltgrenze statt. Zugleich kann ein anschließendes durch Rauschen verursachtes fehlerhaftes Zurückwechseln auf den vorherigen Stellwert verhindert werden, indem nach dem Wechsel der Einfluss des Rauschens durch die durch verschieben der Schaltgrenze bewirkte bedingte Hysterese unterdrückt wird.

Auch die Verwendung der durch die Schritte c11) und c12) gebildete bedingte Hysterese stellt eine eigenständige Erfindung dar. Sie muss nicht zwingend notwendig mit der Relay-Feedback-Methode kombiniert werden.

Um mit Hilfe eines Hysteresewerts den Einfluss des Rauschens unterdrücken zu können, wird der Hysteresewert in vorteilhafter Weise durch folgende Schritte ermittelt:

f1) zu einer Mehrzahl von aufeinanderfolgenden Zeitpunkten k Berechnen eines Mittelwertes m(k) von Istwerten;

f2) Berechnen einer Standardabweichung s(k) in Abhängigkeit von den Mittelwerten m(k) und den Istwerten x(k) der letzten N Zeitpunkte nach der Formel:

$$s(k) = \sqrt{\frac{1}{N-1} \sum_{n=0}^{N-1} (x(k-n) - m(k-n))^2}$$

f3) Berechnen des Hysteresewertes zu einem Zeitpunkt k in Abhängigkeit von der zu diesem Zeitpunkt berechneten Standardabweichung s(k).

Ein möglicher Hysteresewert kann dabei beispielsweise als Produkt aus der Standardabweichung s(k) und einem Faktor, z.B. 2, berechnet wird.

Der durch die Schritte f1) bis f2) berechnete Wert für die Standardabweichung berücksichtigt eine zeitliche Änderung des Mittelwerts m(k). Dadurch wird das erfindungsgemäße Verfahren auch dann einsetzbar, wenn die auf den Zustand des Systems einwirkenden Störgrößen während des Anwendens der Relay-Feedback-Methode nicht konstant gehalten werden, wie es im Stand der Technik vorausgesetzt wird. Dies stellt somit einen weiteren, entscheidenden Vorteil gegenüber den aus dem Stand der Technik bekannten Verfahren dar. Der gemäß den Schritten f1) und f2) berechnete Wert für die Standardabweichung ist auch unabhängig von der Berechnung eines Hysteresewerts in vorteilhafter Weise für ein Berechnen anderer Größe einsetzbar. Damit stellt ein Verfahren mit den Schritten f1) und f2) eine eigenständige Erfindung dar.

Während des Anwendens der Relay-Feedback-Methode wird der Schritt c) des Ausgebens von zwei vorgebbaren Stellwerten in vorteilhafte Weise durch die folgenden Teilschritte umgesetzt:

c21) Berechnen eines ersten Schwellwertes, der dem um einen vorbestimmten Wert erhöhten Sollwert entspricht, und eines zweiten Schwellwertes, der dem um den vorbestimmten Wert verringerten Sollwert entspricht;

c22) Anpassen der beiden vorgebbaren Stellwerte, so dass der zeitliche Verlauf der Istwerte innerhalb eines durch eine Anzahl von Zeitpunkten vorgegebenen Zeitintervalls wenigstens einmal den ersten Schwellwert überschreitet und wenigstens einmal den zweiten Schwellwert unterschreitet.

Durch automatisches Nachführen der Stellwerte wird der Vorteil erreicht, dass die Relay-Feedback-Methode auch angewendet werden kann, wenn die Störgrößen sich mit der Zeit ändern. Es wird damit erstmals möglich, die Relay-Feedback-Methode in einem System ohne stabilen Arbeitspunkt, d.h. in einem System mit einer Drift aufgrund von veränderlichen Störgrößen einzusetzen. Das Nachführen der Stellwerte gemäß den Teilschritten c21) und c22) stellt dabei ebenfalls für sich eine eigene Erfindung dar.

Um auch bei nicht-schwingungsfähigen Systemen den Verlauf des Istwerts beim Anwenden der Relay-Feedback-Methode zum Oszillieren bringen zu können, wird in vorteilhafter Weise das Ausgeben des Stellwerts in Abhängigkeit von einer Differenz zwischen einem Istwert und einem Sollwert zu einem gegenüber dem Zeitpunkt des Ausgebens vorangehenden Zeitpunkt durchgeführt. Mit anderen Worten wird eine Differenz, die zu einem gegebenen Zeitpunkt berechnet wird, zunächst um eine vorgegebene Zeit verzögert, bevor sie an bei der Regelung eingesetzt wird. Eine solche Verzögerung ist in besonders einfacher Weise durch Zwischenspeichern einer ermittelten Differenz in einem Speicher durch ein Verzögerungsglied bereitstellbar.

Der Einfluss des Verzögerungsglieds auf die durch die Relay-Methode ermittelten Parameter lässt sich besonders leicht herausrechnen, so dass das Verzögerungsglied nach Beenden der Relay-Feedback-Methode deaktiviert werden kann und für eine dadurch unverzögerte Regelung korrekte Parameterwerte bereitstehen.

Das erfindungsgemäße Verfahren kann u.a. in Form eines Programmcodes bereitgestellt werden. In diesem Zusammenhang umfasst die Erfindung auch einen Datenträger mit einem Programmcode zum Ablaufenlassen eines Programms, das geeignet ist, im Zusammenwirken mit einer Datenverarbeitungsanlage das erfindungsgemäße Verfahren auszuführen. Auch zu den oben genannten eigenständigen Erfindungen kann ein Programmcode bereitgestellt werden.

Zu der Erfindung gehört auch eine Regeleinheit, die dazu geeignet ist, eine physikalische Größe (z.B. eine Temperatur oder eine Umdrehungszahl) zu erfassen, sie in einen für die Durchführung des erfindungsgemäßen Verfahrens Form als Istwert bereitzustellen und des Weiteren auch tatsächlich auszuführen, wobei die sich ergebenden Stellwerte in für ein Steuern einer Stelleinheit geeignete physikalische Größe (z.B. eine Steuerspannung) zu wandeln.

Die Erfindung wird im Folgenden anhand von Ausführungsbeispielen erläutert. Dazu zeigen:

FIG 1    ein Diagramm mit Graphen von zeitlichen Verläufen ei- nes Sollwerts, eines Stellwerts und eines Istwerts, wie sie sich bei einer Anwendung einer Ausführungs- form des erfindungsgemäßen Verfahrens ergeben;

FIG 2    ein Diagramm mit Graphen von zeitlichen Verläufen ei- nes Sollwerts, eines Stellwerts und eines Istwerts, wie sie sich bei einer Ausführungsform des erfin- dungsgemäßen Verfahrens beim Berechnen einer stati- schen Streckenverstärkung ergeben;

FIG 3    einen Verlauf eines Stellwerts, wie er sich für eine verrauschte Messung des Istwerts und bei Einsatz ei- ner bedingten Hysterese ergibt;

FIG 4    einen weiteren Verlauf des Stellwerts bei verrausch- ter Messung des Istwerts und Verwenden einer soge- nannten bedingten Hysterese;

FIG 5    ein Diagramm mit Graphen von Verläufen eines mit ei- ner verrauschten Messung erfassten Istwerts, einem daraus berechneten Mittelwert und davon abhängigen Hysteresewerten;

FIG 6    ein Diagramm mit Graphen von Verläufen eines Soll- werts, eines Stellwerts und eines Istwerts, wie sie sich für eine Ausführungsform des erfindungsgemäßen Verfahrens bei einem Anpassen von vorgebbaren Stell- werten ergibt;

FIG 7    ein Blockdiagramm mit einer Regeleinheit und einem durch diese geregelten System sowie einem der Regel- einheit vorgeschalteten Verzögerungsglied.

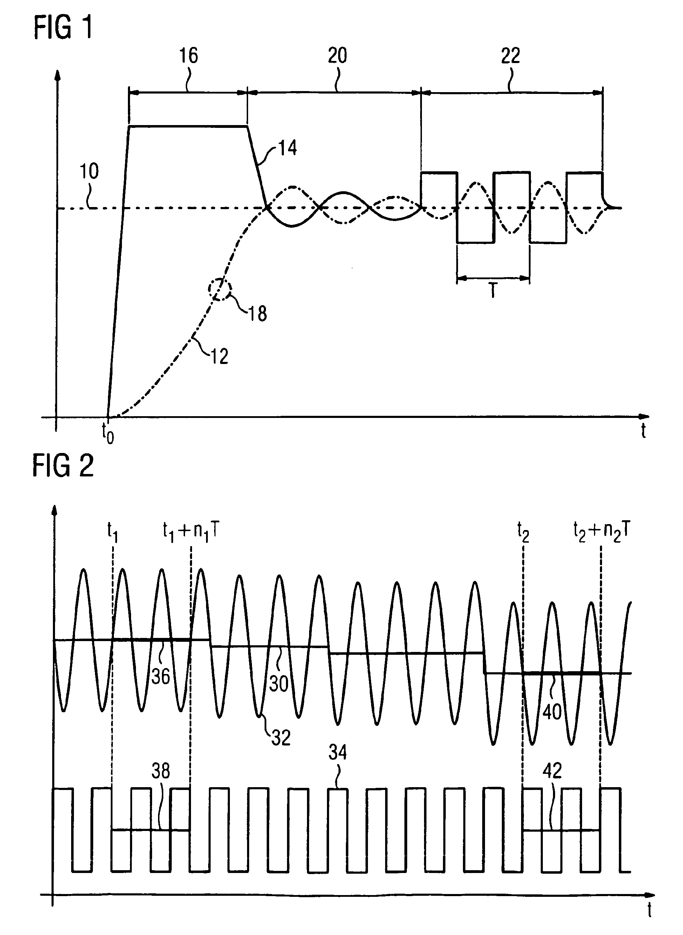

Die Graphen in FIG 1 stellen Verläufe für einen Sollwert 10 (strich-zweipunktierte Line), einen Istwert 12 (strich-punktierte Linie) und einen Stellwert 14 (durchgezogene Linie) dar. Der Verlauf ist über der Zeit t aufgetragen. Bei den Graphen handelt es sich um zu Linien verbundenen, einzelnen Werten, die in einem digitalen System zu Zeitpunkten einer durch einen Zeittakt vorgegebenen Folge bestimmt sind. Jedem Graphen ist hierbei zur besseren Veranschaulichung der zeitlichen Zusammenhänge eine eigene Skalierung der Ordinate zugeordnet.

Die Graphen spiegeln folgenden Vorgang wieder: Eine Regelung, die gemäß einer Ausführungsform des erfindungsgemäßen Verfahrens mit Parameterwerten eines zu regelnden Systems konfiguriert werden soll, wird zu einem Zeitpunkt $t_0$ aktiviert. Daraufhin wird in einer ersten Phase 16, deren Dauer in FIG 1 angegeben ist, ein konstanter Stellwert 14 ausgegeben. Dieses Verhalten der Regelung wird ausgelöst, weil der Abstand des Istwerts 12 vom Sollwert 10 zum Zeitpunkt $t_0$ größer als ein vorgegebener Wert ist. Der während der Phase 16 über die Zeit konstante Stellwert 14 ist der von einem Anwender angegebene maximale Stellwert für eine Stelleinheit des zu regelnden Systems. Der Verlauf der Istwerte 12 nähert sich aufgrund des während der ersten Phase 16 ausgegebenen Stellwerts 14 dem Sollwert 10 immer weiter an, wobei ein Graph des Verlaufs einen Punkt 18 der maximalen Steilheit ausbildet. Dieser Punkt 18 ist ein mathematischer Wendepunkt, der von der Regelung erkannt wird und dazu genutzt wird, u.a. die sogenannte Totzeit des Systems, also die Reaktionszeit des Systems auf eine Änderung der Einstellung der Stelleinheit, nach dem Wendetangentenverfahren zu berechnen. Nachdem der Punkt 18 der maximalen Steilheit des Verlaufs der Istwerte 12 von der Regelung erkannt worden ist, wird anhand der daraus ermittelbaren Parameterwerte sowie weiterer, vordefinierten Werten ein PID-Regler vorkonfiguriert und anschließend der Stellwert 14 in einer zweiten Phase 20 gemäß einer PID-Regelung in Abhängigkeit von der zu einem Zeitpunkt gegebenen Differenz zwischen dem jeweiligen Istwert 12 und dem jeweiligen Sollwert 10 berechnet. Die vordefinierten Parameterwerte, zu denen in der ersten Phase 16 noch keine entsprechenden Parameterwerte aus dem System vorliegen, sind so gewählt, dass ein zu starkes überschwingen des Istwerts 12 über den Sollwert 10 verhindert wird.

Nachdem sich der Istwert 12 während der zweiten Phase 20 für eine vorgegebene Zeitdauer innerhalb eines vorbestimmten Intervalls um den Sollwert 10 bewegt hat, wird in einer dritten Phase 22 die PID-Regelung durch eine Relay-Feedback-Regelung ersetzt, die zum Steuern der Stelleinheit zu jedem Zeitpunkt jeweils einen von zwei vorgebbaren Stellwerten in Abhängigkeit von einer Differenz zwischen dem Istwert 12 und dem Sollwert 10 ausgibt. Dadurch nimmt die maximale Differenz des Istwerts 12 und des Sollwerts 10, d.h. die Amplitude des oszillierenden Verlaufs des Istwerts 12 bei dem den Graphen in der FIG 1 zugrunde liegenden System wieder zu. Durch Messen einer Periodendauer T der in Phase 22 hervorgerufenen Oszillation des Istwerts 12 und der Amplitude während der Schwingung können die restlichen Parameterwerte zum Anpassen der PID-Regelung an das zu regelnde System mit aus dem Stand der Technik bekannten Methoden (z.B. Relay-Feedback-Methode oder Ziegler-Nichols-Methode) bestimmt werden. Anschließend kann die dritte Phase 22 beendet werden und der Istwert mittels einer PID-Regelung mit den aus dem zu regelnden System ermittelten Parameterwerten optimal auf den Sollwert 10 eingeregelt werden.

Das in FIG 2 gezeigte Diagramm zeigt Verläufe für einen Sollwert 30, einen Istwert 32 und einen Stellwert 34, wie sie sich beim Ermitteln einer statischen Streckenverstärkung während eines Anwendens der Relay-Feedback-Methode nach einer Ausführungsform des erfindungsgemäßen Verfahrens ergeben. Die Verläufe der Werte sind über der Zeit t aufgetragen. Die Ordinaten sind wie zu FIG 1 erläutert für jeden Graphen unterschiedlich skaliert, so dass sich die zeitlichen Zusammenhänge zwischen den Graphen leichter erkennen lassen.

Zum Ermitteln der statischen Streckenverstärkung wird für ein Zeitintervall, das sich von einem Zeitpunkt $t_1$ bis zu einem Zeitpunkt $t_1+n_1T$ erstreckt, ein Mittelwert 36 für den Istwert 32 und ein entsprechender Mittelwert 38 für den Stellwert 34 berechnet. Zum Bilden des Intervalls wird ausgehend vom Zeitpunkt $t_1$ ein Vielfaches $n_1$ der beobachteten Periodendauer T der durch die Relay-Feedback-Methode ausgelösten Oszillation des Istwerts 32 benutzt. Wie in FIG 2 zu erkennen ist, dauern die Zeitintervalle zum Berechnen der Mittelwerte zwei Periodendauern T, d.h. der Faktor $n_1$ ist gleich zwei. Der Mittelwert 36 des Istwerts 32 und der Mittelwert 38 des Stellwerts 34 für das erste Intervall sind in FIG 2 als horizontale Balken dargestellt.

Um für eine Berechnung der statische Streckenverstärkung ein zweites Paar von Mittelwerten zu erhalten, wird der Sollwert 30 iterativ abgeändert, so lange bis sich die Mittelwerte des Istwerts 32 und des Stellwerts 34 gemäß einem vorgegebenen Kriterium deutlich von den zum Zeitpunkt $t_1+n_1T$ berechneten Mittelwerten unterscheiden.

Ein zweites Paar von Mittelwerten wird schließlich in einem Zeitintervall, das von einem Zeitpunkt $t_2$ bis zu einem Zeitpunkt $t_2+n_2T$ reicht, gemessen. Dabei ist $n_2$ ebenfalls gleich zwei. Somit ergibt sich ein weiterer Mittelwert 40 für den Verlauf der Istwerte 32 und ein weiterer Mittelwert 42 für den entsprechenden Verlauf der Stellwerte 34 für einen abgeänderten Sollwert 30. Durch Bilden der Differenz zwischen dem Mittelwert 40 und dem Mittelwert 36 der Istwerte 32 sowie der Differenz zwischen dem Mittelwert 42 und dem Mittelwert 38 der Stellwerte 34 und anschließendes Dividieren der beiden Differenzen wird in einer das Verfahren ausführenden Regeleinheit die statische Streckenverstärkung bestimmt. Die Subtraktion und die Division können dabei sehr genau berechnet werden, da sich wie oben beschrieben, die Mittelwerte ausreichend voneinander unterscheiden.

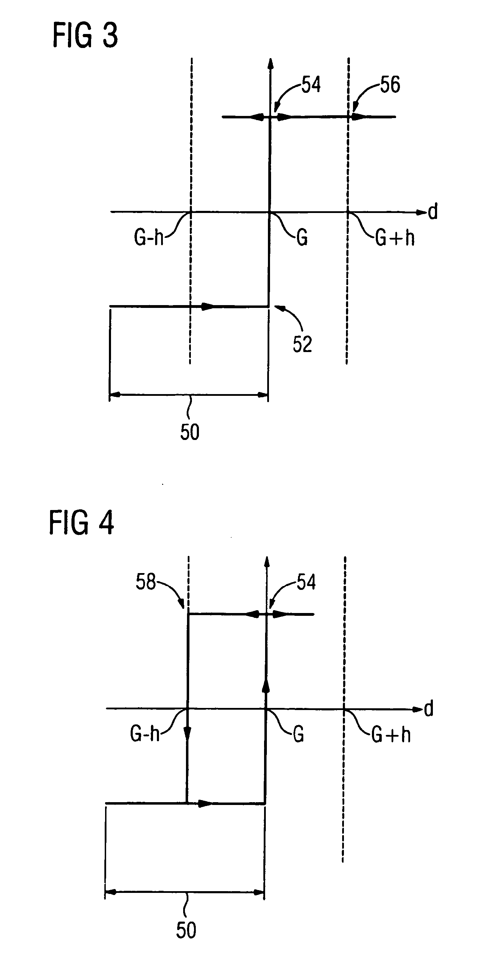

In FIG 3 ist in einem Diagramm ein Zusammenhang zwischen einer in einer Regeleinheit gebildeten Differenz d zwischen einem Istwert und einem Sollwert und dem dazu ausgegebenen Stellwert gezeigt, wie er sich durch eine sogenannte bedingte Hysterese gemäß einer Ausführungsform des erfindungsgemäßen Verfahrens ergibt. Durch die bedingte Hysterese wird eine Schaltgrenze G, bei deren Überschreiten durch die Differenz d der ausgegebene Stellwert jeweils gewechselt wird, unmittelbar nach einem solchen Wechsel geändert. Dadurch wirken sich durch Messrauschen bedingte Schwankungen der Differenz d nicht auf den ausgegebenen Stellwert aus. Bedingt heißt diese Hysterese deshalb, weil sie nur nach einem Wechsel des Stellwerts und dann nur für einige Zeit in Kraft tritt, wie im Folgenden näher erläutert wird.

Der Stellwert ist in dem Diagramm in FIG 3 auf der Ordinate aufgetragen. Ein zeitlicher Verlauf der ausgegebenen Stellwerte ist dabei in FIG 3 durch Pfeile angedeutet. In einem ersten Zeitabschnitt 50 ergeben sich Differenzen d, die kleiner als eine erste Schaltgrenze G sind. Der Wert der ersten Schaltgrenze G ist gleich Null. Da sich während des Zeitabschnitts 50 sämtliche beobachteten Differenzen d auf derselben Seite der Schaltgrenze G befinden, d.h. hier sind sämtliche Differenzen kleiner als Null, wird entsprechend immer derselbe Stellwert von der Regeleinheit ausgegeben. Der Differenz d, der von der Regeleinheit zu einem Zeitpunkt 52 berechnet wurde, und eine darauffolgend zu einem Zeitpunkt 54 berechnete Differenz d liegen jeweils auf unterschiedlichen Seiten der ersten Schaltgrenze G. Hier bedeutet dies, dass die Differenz d zum Zeitpunkt 52 kleiner als Null ist und die darauffolgend berechnete Differenz d größer als Null. Die Regeleinheit wechselt daraufhin den Stellwert und ersetzt die erste Schaltgrenze G durch eine zweite Schaltgrenze G-h, hier also -h, so dass sich eine Hysterese mit dem Hysteresewert h ergibt. Die zweite Schaltgrenze wird auf G-h und nicht auf G+h gesetzt, weil die Differenz d in dem dem Wechsel vorangegangenen Zeitabschnitt 50 kleiner als G war. Für den Fall, dass die Differenz d vor dem Wechsel des ausgegebenen Stellwerts größer als die erste Schaltgrenze G ist, wird die zweite Schaltgrenze auf den Wert G+h gesetzt.

Nach dem Wechsel des Stellwerts zum Zeitpunkt 54 schwanken die Differenzen d aufgrund von Messrauschen, das einen Einfluss auf den gemessenen Istwert hat, um die erste Schaltgrenze G. Da nach dem Wechsel des Stellwerts zum Zeitpunkt 54 die Hysterese aktiviert wurde, die Schaltgrenze also bei G-h liegt, bleibt der Stellwert konstant. Es wird somit verhindert, dass verrauschte Istwerte dazu führen, dass die Regeleinheit durch Messrauschen verursachte, schnell schwankende Stellwerte ausgibt, was zu einer Beschädigung einer durch die Regeleinheit gesteuerten Stelleinheit führen würde. Nachdem die Differenzen d ab einem Zeitpunkt 56 vom Betrage her größer als der Hysteresewert h sind, wird die bis dahin gültige zweite Schaltgrenze G-h wieder durch die ursprüngliche erste Schaltgrenze G ersetzt. Die Regeleinheit ist durch die bedingte Hysterese in der Lage, ohne Zeitverzögerung bei Erreichen einer ersten, durch einen Benutzer vorgebbaren ersten Schaltgrenze G zu schalten und dennoch stabile Stellwerte auch bei verrauschten Messsignalen zu erzeugen.

In FIG 4 ist die Abhängigkeit zwischen den durch dieselbe Regeleinheit wie in FIG 3 berechneten Differenzen d und den resultierenden Stellwerten dargestellt. Die Stellwerte sind in FIG 4 wie in FIG 3 auf der Ordinate aufgetragen. Wie bei dem Verlauf der Differenzen d in FIG 3 liegen auch bei dem Verlauf in FIG 4 die beobachteten Differenzen d zu einem ersten Zeitabschnitt 50 unterhalb einer ersten Schaltgrenze G. Zu einem Zeitpunkt 54 wird eine Differenz d ermittelt, die nicht mehr wie die vorangegangenen Differenzen d kleiner als die erste Schaltgrenze G ist, sondern größer als dieselbe. Daher wechselt die Regeleinheit den ausgegebenen Stellwert und verschiebt die Schaltgrenze um einen Hysteresewert h auf den Wert G-h. Im Unterschied zum zeitlichen Verlauf der Differenzen d, wie er den Graphen in FIG 3 zugrunde liegt, sind die Differenzen d in dem in FIG 4 gezeigten Fall kurz nach dem Zeitpunkt 54 wieder dauerhaft kleiner als die erste Schaltgrenze G. Insbesondere wird zu einem Zeitpunkt 58 die zweite Schaltgrenze G-h unterschritten. Daraufhin wechselt der ausgegebene Stellwert wieder auf den Stellwert zurück, wie er auch während des Zeitabschnitts 50 ausgegeben wurde. Gleichzeitig wird die Schaltgrenze wieder zurück auf die erste Schaltgrenze G gesetzt.

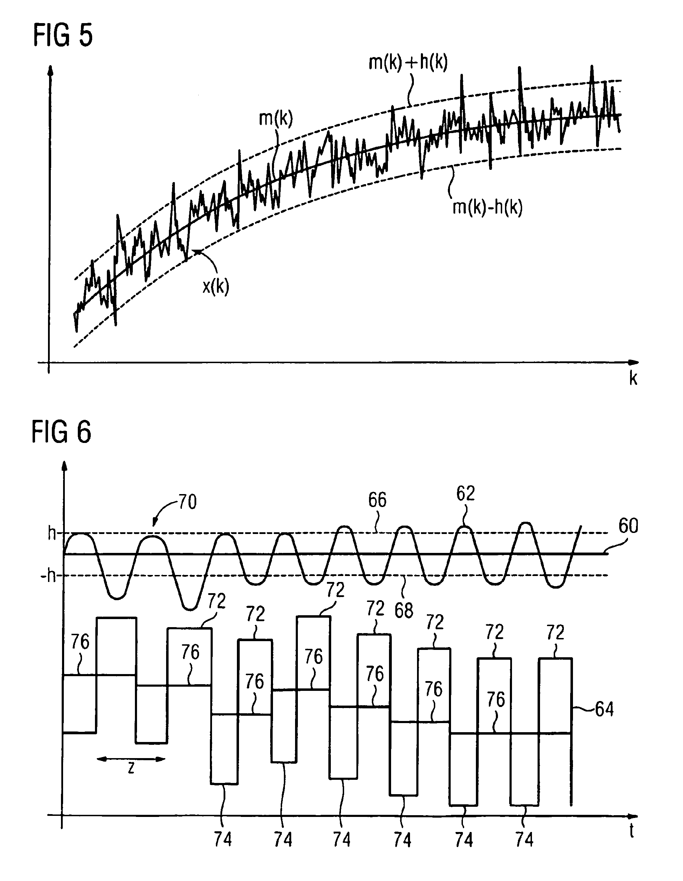

In FIG 5 ist der Verlauf von zu diskreten Zeitpunkten gemessenen Istwerten x(k) und einem daraus gebildeten Mittelwert m(k) dargestellt. Des Weiteren ist zu jedem Zeitpunkt zu dem Mittelwert m(k) das Intervall dargestellt, das sich aus einem abhängig von dem berechneten Mittelwert m(k) berechneten Hysteresewert h(k) ergibt. Das Intervall hat dabei die Grenzen m(k)-h(k) und m(k)+h(k). Der Mittelwert m(k) und der davon abhängige Hysteresewert h(k) werden von einer Regeleinheit automatisch berechnet, indem auf Grundlage der zeitvarianten Mittelwerte m(k) und den Istwerten x(k) zunächst eine Standardabweichung s(k) berechnet wird. Der Hysteresewert h(k) zu einem Zeitpunkt k ergibt sich dann als h(k)=g*m(k), also ein Faktor g multipliziert mit dem Mittelwert m(k). Der Faktor g ist in dem in FIG 5 gezeigten Fall gleich 2. Durch Anpassen des Hysteresewertes h(k) an die Standardabweichung s(k) eines durch Messrauschen gestörten Istwerts x(k) ist die Regeleinheit in der Lage, eine besonders stabile, d.h. vom Rauschen unbeeinflusste Regelung eines Systems zu ermöglichen. Indem bei der Berechnung der Standardabweichung s(k) die zeitliche Änderung des Mittelwerts m(k) berücksichtigt wird, kann der Hysteresewert h(k) auch dann ermittelt werden, wenn zeitlich veränderliche Störgrößen auf das zu regelnde System einwirken.

Das Diagramm in FIG 6 zeigt Graphen von Verläufen eines Sollwerts 60, eines zugehörigen Istwerts 62 und eines an eine Stelleinheit eines Systems übertragenen Stellwerts 64. Die Verläufe sind über der Zeit t aufgetragen. Die Stellwerte 64 werden von einer Regeleinheit ausgegeben, die eine Ausführungsform des erfindungsgemäßen Verfahrens ausführt. Die Stellwerte werden in dem in FIG 6 gezeigten Zeitabschnitt gemäß der Relay-Feedback-Methode erzeugt.

Die Regeleinheit überwacht den Verlauf des Istwerts 62 darauf hin, ob er innerhalb eines vorbestimmten Zeitintervalls Z wenigstens einmal einen vorbestimmten ersten Schwellwert 66 über- und einen vorbestimmten zweiten Schwellwert 68 unterschreitet. Die Schwellwerte 66, 68 werden dabei ausgehend vom Sollwert 60 durch Addieren bzw. Subtrahieren eines vorbestimmten Werts berechnet. In dem in FIG 6 gezeigten Beispiel ist dieser Wert ein Hysteresewert h. Das Zeitintervall Z wird durch die Regeleinheit in einer Anfangsphase des Ausführens der Relay-Feedback-Methode gleich einem vorgegebenen Standardwert gesetzt und anschließend in Abhängigkeit von der beobachteten Periodendauer des oszillierenden Verlaufs des Istwerts 62 bestimmt.

In dem in FIG 6 im Diagramm gekennzeichneten Zeitintervall Z wird der erste Schwellwert 66 nicht durch den Istwert 62 überschritten, weil sich eine Störgröße, die auf das von der Regelung zu regelnde System einwirkt, geändert hat. Das Maximum 70 des Verlaufs des Istwerts 62 liegt aufgrund der durch die Änderung der Störgröße hervorgerufenen Drift des Istwerts 62 unterhalb des ersten Schwellwerts 66. Durch die Regeleinheit werden in der Folge der obere Stellwert 72 und der untere Stellwert 74 der gemäß der Relay-Feedback-Methode zweiwertigen Regelung solange geändert, bis der Verlauf des Istwerts 62 den oberen Schwellwert 66 und den unteren Schwellwert 68 innerhalb eines Zeitintervalls der Länge Z deutlich, d.h. hier für eine in FIG 6 nicht weiter angedeuteten Mindestdauer über- bzw. unterschreiten. Als Folge der Änderung der zwei möglichen Stellwerte 72, 74 ändert sich der Mittelwert 76 des ausgegebenen Stellwerts 64 über der Zeit t. Nachdem die Regeleinheit die Stellwerte 72, 74 soweit angepasst hat, dass der Istwert 62 trotz der Änderung in der Störgröße wieder den gewünschten Verlauf aufweist, entspricht der sich dann ergebende Mittelwert 76 demjenigen Stellwert, bei dessen Ausgabe der Istwert 62 den Sollwert 60 annehmen würde. Das Ermitteln dieses neuen, idealen Stellwerts während einer Durchführung des Relay-Feedback-Methode ist erstmals durch die eben beschriebene, durch eine Ausführungsform des erfindungsgemäßen Verfahrens gegebene Anpassung der Stellwerte 72, 74 möglich.

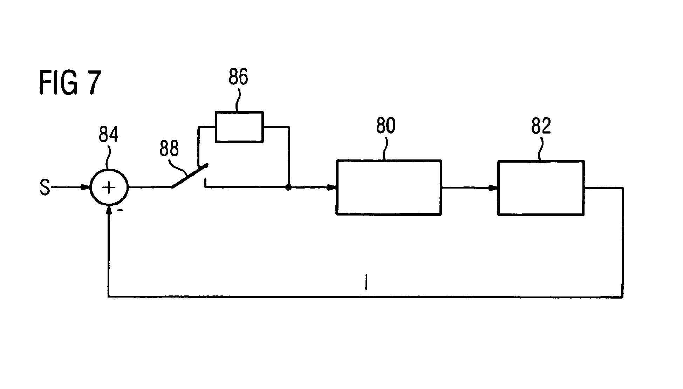

In FIG 7 ist ein Blockdiagramm einer Anordnung mit einer Regeleinheit 80 dargestellt, die in regelmäßigen Zeitabständen Stellwerte an ein System 82 überträgt. Das System 82 umfasst einen Raum, dessen Temperatur auf einem Sollwert gehalten werden soll, und eine Heizanlage zum beheizen des Raumes. Die Temperatur stellt eine Zustandsgröße des Systems 82 dar. Die Heizanlage des Systems 82 umfasst eine Stelleinheit, die die Stellwerte von der Regeleinheit 80 empfängt und in Abhängigkeit von den Stellwerten die Heizleistung der Heizanlage einstellt. Über ein in dem Raum befindliches elektrisches Thermometer wird in regelmäßigen Zeitabständen eine Temperatur des Raumes gemessen. Sie wird als digitaler Istwert I an eine Recheneinheit 84 übertragen, die eine Differenz aus einem Sollwert S und dem Istwert I bildet. Die Regeleinheit 80 erfasst Parameterwerte des Systems 82 und der gesamten Anordnung aus Regeleinheit 80, System 82 und Recheneinheit 84 auf Grundlage einer Ausführungsform des erfindungsgemäßen Verfahrens. Da sich das System 82 mit der Temperatur als Zustandsgröße wie ein System erster Ordnung, also ein nicht-schwingungsfähiges System verhält, wird der Regeleinheit 82 für die Dauer einer Durchführung einer gemäß einer Ausführungsform der Erfindung weitergebildeten Relay-Feedback-Methode ein Verzögerungsglied 86 vorgeschaltet. Durch das Verzögerungsglied 86 wird das in FIG 7 dargestellte Gesamtsystem schwingungsfähig, so dass die Regeleinheit 80 Parameterwerte für ein Konfigurieren einer PID-Regelung ermitteln kann. Dabei wird der Einfluss des Verzögerungsgliedes 86 berücksichtigt, und die ermittelten Parameterwerte werden entsprechend korrigiert.

Nach Beenden des Ermittelns der Parameterwerte werden die von der Recheneinheit 84 berechneten Werte nicht mehr über das Verzögerungsglied 86 geführt, sondern direkt an die Regeleinheit 80 übertragen. In FIG 7 ist dieser mögliche Wechsel durch einen Schalter 88 symbolisiert. Durch Entfernen des Verzögerungsgliedes 86 aus dem Regelkreis während des regulären Betriebs ist die Regeleinheit 80 in der Lage, mit einer geringen zeitlichen Verzögerung auf Änderungen des Istwerts I zu reagieren.

Wie insgesamt durch die Figuren gezeigt wird, wird es durch das erfindungsgemäßen Verfahren ermöglicht, für eine Regelung eines Zustands eines Systems sämtliche für ein Konfigurieren der Regelung nötigen Parameterwerte automatisch zu ermitteln. Dadurch ist es für einen Benutzer nicht mehr notwendig, vor einer Inbetriebnahme des Systems zunächst einzelne Parameterwerte in einem separaten Testbetrieb zu ermitteln. Ein Regeln des Systems wird somit ohne genaue Vorkenntnisse der physikalischen Eigenschaften des zu regelnden Systems möglich. Das Ermitteln ist dabei selbst bei verrauschten Messungen des Istwerts und bei einer zeitlichen Änderung von Störgrößen während des Ermittelns möglich.

**Patentansprüche**

1. Verfahren zum Ermitteln von Parameterwerten zum Regeln eines Zustands eines Systems, wobei zum Regeln zu Zeitpunkten einer durch einen vorbestimmten Zeittakt vorgegebenen Folge jeweils ein den momentanen Zustand des Systems beschreibender, gemessener Istwert (12) sowie ein zu dem Istwert (12) vorgebbarer Sollwert (10) entgegengenommen und ein Stellwert (14) ausgegeben wird, der geeignet ist, eine den Zustand des Systems beeinflussende Stelleinheit zu steuern,
**gekennzeichnet durch** die Schritte:

a) Ausgeben eines konstanten Stellwertes (14) für mehrere, aufeinanderfolgende Zeitpunkte (16) und Überwachen eines zeitlichen Verlaufs der Istwerte (12), zumindest bis ein mathematischer Wendepunkt (18) in dem zeitlichen Verlauf ermittelt wird, **wobei anhand dieses mathematischen Wendepunktes zumindest ein Parameterwert ermittelt wird;**
b) anschließend (20) **unter Berücksichtigung des zumindest einen Parameterwertes** für jeden Zeitpunkt jeweils Ausgeben eines Stellwertes (14), der in Abhängigkeit von einer momentanen Differenz zwischen dem jeweiligen Istwert (14) und dem jeweiligen Sollwert (10) berechnet wird, solange bis die momentane Differenz ein vorbestimmtes erstes Kriterium erfüllt;
c) danach für mehrere, aufeinanderfolgende Zeitpunkte (22) jeweils Ausgeben eines von zwei vorgebbaren Stellwerten (14) in Abhängigkeit von einer Differenz zwischen einem Istwert und einem Sollwert;
d) dabei Ermitteln von Zeitdauern (T) für Intervalle, wobei für ein Intervall die Istwerte ein vorbestimmtes zweites Kriterium erfüllen; und wobei

**der in Schritt a) ausgegebene konstante Stellwert (14) größer als die in Schritt b) und c) ausgegebenen Stellwerte (14) ist.**

2. Verfahren nach Anspruch 1,
**gekennzeichnet durch** die Schritte:

e1) zu einem vorgegebenen Sollwert (30) Berechnen eines Mittelwerts (36) aus einer Mehrzahl von aufeinanderfolgenden Istwerten (32) und eines Mittelwerts (38) aus einer Mehrzahl von aufeinanderfolgenden, ausgegebenen Stellwerten (34);
e2) Erzeugen eines abgeänderten Sollwertes (30) und zu dem abgeänderten Sollwert (30) Berechnen von Mittelwerten (40, 42) der in Schritt e1) genannten Art;
e3) Berechnen des Verhältnisses aus einer Differenz der Mittelwerte (36, 40) der Istwerte (32) und einer Differenz der Mittelwerte (38, 42) der ausgegebenen Stellwerte (34).

**3.** Verfahren nach Anspruch 1 oder 2,
wobei der Schritt c) des Ausgebens eines von zwei vorgebbaren Stellwerten durch die folgenden Teilschritte gegeben ist:

c11) zu einem Zeitpunkt (50) Ausgeben des jeweils zum vorangegangenen Zeitpunkt (50) ausgegebenen Stellwerts, wenn die Differenz (d) und die Differenz (d) zum vorangegangenen Zeitpunkt auf derselben Seite einer ersten Schaltgrenze (G) liegen, und Wechseln (54) des Stellwerts, wenn die Differenz (d) und die Differenz (d) zum vorangegangenen Zeitpunkt (52) auf jeweils unterschiedlichen Seiten der ersten Schaltgrenze (G) liegen;
c12) nach einem Wechsel (54) des Stellwerts, Durchführen von Schritt c11) unter Ersetzen der ersten Schaltgrenze (G) durch eine zweite Schaltgrenze (G-h), die der um einen Hysteresewert (h) verschobenen ersten Schaltgrenze (G) entspricht, solange bis der Betrag der Differenz (d) größer als der Hysteresewert (h) ist.

**4.** Verfahren nach Anspruch 3,
wobei das Berechnen des zu einem Zeitpunkt verwendeten Hystereswertes die folgenden Schritte umfasst:

f1) zu einer Mehrzahl von aufeinanderfolgenden Zeitpunkten k Berechnen eines Mittelwertes m(k) von Istwerten;
f2) Berechnen einer Standardabweichung s(k) in Abhängigkeit von den Mittelwerten m(k) und den Istwerten x(k) der letzten N Zeitpunkte nach der Formel:

$$s(k) = \sqrt{\frac{1}{N-1}\sum_{n=0}^{N-1}(x(k-n)-m(k-n))^2}$$

f3) Berechnen des Hysteresewertes zu einem Zeitpunkt k in Abhängigkeit von der zu diesem Zeitpunkt berechneten Standardabweichung s(k).

**5.** Verfahren nach einem der vorhergehenden Ansprüche,
wobei der Schritt c) des Ausgebens eines von zwei vorgebbaren Stellwerten die folgenden Teilschritte umfasst:

c21) Berechnen eines ersten Schwellwertes (66), der dem um einen vorbestimmten Wert (h) erhöhten Sollwert (60) entspricht, und eines zweiten Schwellwertes (68), der dem um den vorbestimmten Wert (h) verringerten Sollwert (60) entspricht;
c22) Anpassen der beiden vorgebbaren Stellwerte (72, 74), so dass der zeitliche Verlauf der Istwerte (62) innerhalb eines durch eine Anzahl von Zeitpunkten vorgegebenen Zeitintervalls (Z) wenigstens einmal den ersten Schwellwert (66) überschreitet und wenigstens einmal den zweiten Schwellwert (68) unterschreitet.

**6.** Verfahren nach einem der vorangehenden Ansprüche,
**dadurch gekennzeichnet, dass** in Schritt c) das Ausgeben des Stellwerts in Abhängigkeit von einer Differenz (84) zwischen einem Istwert (I) und einem Sollwert (S) zu einem gegenüber dem Zeitpunkt des Ausgebens vorangehenden Zeitpunkt (86) geschieht.

**7.** Datenträger mit einem Programmcode zum Ablaufenlassen eines Programms, das geeignet ist, im Zusammenwirken mit einer Datenverarbeitungsanlage ein Verfahren nach einem der Ansprüche 1 bis 6 auszuführen.

**8.** Regeleinheit (80), mit der eine physikalische Größe erfassbar und in einer für ein Ausführen eines Regelverfahrens geeigneten Form als Istwert (I) bereitstellbar ist und mit der ein Regelverfahren selbst ausführbar ist, wobei in Abhängigkeit von sich aus dem Ausführen des Regelverfahrens ergebenden Stellwerten durch die Regeleinheit (80) eine für ein Steuern einer Stelleinheit geeignete physikalische Größe erzeugbar ist,
**dadurch gekennzeichnet, dass** für ein automatisches Ermitteln von Parameterwerten die Regeleinheit (80) dazu eingerichtet ist, eines der Verfahren nach einem der Ansprüche 1 bis 6 auszuführen.

**Claims**

**1.** Method for determining parameter values in order to control a state of a system, in order to exert control at instants in a sequence prescribed by a predetermined clock cycle, in each case a measured actual value (12) describing the instantaneous state of the system and a desired value (10) which can be prescribed relative to the actual value (12) is received, and there is output a manipulated variable (14) which is suitable for controlling an actuating unit influencing the state of the system,

**characterized by** the steps of:

a) outputting a constant manipulated variable (14) for a plurality of consecutive instants (16), and monitoring a time profile of the actual values (12), at least until a mathematical point of inflection (18) is determined in the time profile, at least one parameter value being determined with the aid of this mathematical point of inflection;

b) while taking account of the at least one parameter value, subsequently (20) respectively outputting for each instant a manipulated variable (14) which is calculated as a function of an instantaneous difference between the respective actual value (12) and the respective desired value (10) until the instantaneous difference meets a predetermined first criterion;

c) thereafter respectively outputting for a plurality of consecutive instants (22) one of two prescribable manipulated variables (14) as a function of a difference between an actual value and a desired value; and

d) in the process determining time durations (T) for intervals, the actual values meeting a predetermined second criterion for an interval; and

in which the constant manipulated variable (14) output in step a) is greater than the manipulated variables (14) output in steps b) and c).

2. Method according to Claim 1, **characterized by** the steps of:

e1) calculating a mean value (36) in relation to a prescribed desired value (30) from a plurality of consecutive actual values (32), and calculating a mean value (38) from a plurality of consecutive, output manipulated variables (34);

e2) generating a modified desired value (30), and calculating relative to the modified desired value (30) mean values (40, 42) of the type mentioned in step e1); and

e3) calculating the ratio of a difference in the mean values (36, 40) of the actual values (32) and a difference of the mean values (38, 42) of the output manipulated variables (34).

3. Method according to Claim 1 or 2, in which the step c) of outputting one of two prescribable manipulated variables is given by the following partial steps:

c11) at an instant (50), outputting the manipulated variable respectively output at the preceding instant (50) when the difference (d) and the difference (d) relative to the preceding instant lie on the same side of a first stitching limit (G), and changing (54) the manipulated variable when the difference (d) and the difference (d) at the preceding instant (52) lie on respectively different sides of the first switching limit (G); and

c12) after a change (54) in the manipulated variable, carrying out step c11) by replacing the first switching limit (G) with a second switching limit (G-h) which corresponds to a first switching limit (G) displaced by a hysteresis value (h) until the absolute value of the difference (d) is greater than the hysteresis value (h).

4. Method according to Claim 3, in which the calculation of the hysteresis value used at an instant comprises the following steps:

f1) calculating a mean value m(k) of actual values relative to a plurality of consecutive instants k;

f2) calculating a standard deviation s(k) as a function of the mean values m(k) and the actual values x(k) of the last N instants using the formula:

$$s(k) = \sqrt{\frac{1}{N-1} \sum_{n=0}^{N-1} (x(k-n) - m(k-n))^2}$$

f3) Calculating the hysteresis value at an instant k as a function of the standard deviation s(k) calculated at this instant.

5. Method according to one of the preceding claims, in which step c) of outputting one of two prescribable manipulated variables comprises the following partial steps:

c21) calculating a first threshold value (66) which corresponds to the desired value (60) increased by a predetermined value (h), and calculating a second threshold value (68), which corresponds to the desired value (60) reduced by the predetermined value (h); and

c22) adapting the two prescribable threshold values (72, 74) so that the time profile of the actual values (62) within a time interval (Z) prescribed by a number of instants overshoots the first threshold value (66) at least once, and undershoots the second threshold value (68) at least once.

6. Method according to one of the preceding claims, **characterized in that** in step c) the manipulated variable is output as a function of a difference (84) between an actual value (I) and a desired value (S) at an instant (86) preceding the instant of the output.

7. Data medium with a program code for running a program which is suitable for executing a method according to one of Claims 1 to 6 in cooperation with a data processing system.

8. Control unit (80) which can be used to detect a physical quantity and provide it as actual value (I) in a form suitable for executing a control method, and to execute a control method itself, the control unit (80) being capable of generating a physical quantity suitable for controlling an actuating unit as a function of manipulated variables resulting from the execution of the control method,
**characterized in that** the control unit (80) is set up to execute one of the methods according to one of Claims 1 to 6, so as to determine parameter values automatically.

## Revendications

1. procédé de détermination de valeur de paramètre pour le réglage de l'état d'un système, dans lequel, pour le réglage, on reçoit, à des instants d'une séquence prescrite par une cadence temporelle déterminée à l'avance, respectivement une valeur ( 12 ) réelle mesurée et décrivant l'état instantané du système, ainsi qu'une valeur ( 10 ) de consigne pouvant être prescrite par rapport à la valeur ( 12 ) réelle et on émet une valeur ( 14 ) de réglage, qui est propre à commander une unité de réglage influençant l'état du système,
**caractérisé par** les stades, dans desquels

a) on émet une valeur ( 14 ) de réglage constante pendant plusieurs instants ( 16 ) successifs et on contrôle une courbe en fonction du temps des valeurs ( 12 ) réelles, au moins jusqu'à ce qu'un point ( 18 ) d'inflexion mathématique soit déterminé dans la courbe en fonction du temps, dans lequel, au moyen de ce point d'inflexion mathématique, on détermine au moins une valeur de paramètre ;
b) on émet ensuite ( 20 ), en tenant compte de la au moins une valeur de paramètre pour chaque instant, respectivement une valeur ( 14 ) de réglage que l'on calcule en fonction d'une différence instantanée entre la valeur ( 14 ) réelle respective et la valeur ( 10 ) de consigne respective, tant que la différence instantanée satisfait un premier critère déterminé à l'avance ;
c) on émet ensuite pour plusieurs instants ( 22 ) successifs respectivement l'une de deux valeurs ( 14 ) de réglage pouvant être prescrite en fonction d'une différence entre une valeur réelle et une valeur de consigne ;
d) on détermine des durées ( T ) d'intervalle, les valeurs réelles satisfaisant, pour un intervalle, un deuxième critère déterminé à l'avance ; et dans lequel

la valeur ( 14 ) de réglage constante émise dans le stade a) est plus grande que les valeurs ( 14 ) de réglage émises dans les stades b) et c).

2. Procédé suivant la revendication 1,
**caractérisé par** les stades, dans lesquels :

e1) pour une valeur ( 30 ) de consigne prescrite, on calcule une valeur ( 36 ) moyenne d'une multiplicité de valeurs ( 32 ) réelles successives et une valeur ( 38 ) moyenne d'une multiplicité de valeurs ( 34 ) de réglage successives émises ;
e2) on produit une valeur ( 30 ) de consigne modifiée et on calcule pour la valeur ( 30 ) de consigne modifiée des valeurs ( 40, 42 ) moyennes du type mentionné dans le stade e1) ;
e3) on calcule le rapport d'une différence des valeurs ( 36, 40 ) moyennes des valeurs ( 32 ) réelles à une différence des valeurs ( 38, 42 ) moyennes des valeurs ( 34 ) de réglage émises.

3. Procédé suivant la revendication 1 ou 2,
   dans lequel le stade c) de l'émission de l'une de deux valeurs de réglage pouvant être prescrite est donné par les stades partiels suivantes :

   c11) à un instant ( 50 ), on émet la valeur de réglage émise respectivement à l'instant ( 50 ) précédent, si la différence ( d ) et la différence ( d ) à l'instant précédent se trouvent du même côté d'une première limite ( G ) de commutation, et on change ( 54 ) la valeur de réglage, si la différence ( d ) et la différence ( d ) à l'instant ( 52 ) précédent se trouvent sur des côtés différents de la première limite ( G ) de commutation ;
   c12) après un remplacement de la valeur de réglage, on effectue le stade c11) en remplaçant la première limite ( G ) de commutation par une deuxième limite ( G-h ) de commutation, qui correspond à la première limite ( G ) de commutation décalée d'une valeur ( h ) d'hystérésis, tant que la valeur absolue de la différence ( d ) est plus grande que la valeur ( h ) d'hystérésis.

4. Procédé suivant la revendication 3,
   dans lequel le calcul de la valeur d'hystérésis utilisée à un instant comprend les stades suivantes :

   f1) on calcule pour une multiplicité d'instants ( k ) successifs une valeur m ( k ) moyenne de valeur réelle ;
   f2) on calcule un écart-type s ( k ) en fonction des valeurs m ( k ) moyennes et des valeurs x ( k ) réelles des N derniers instants par la formulé :

   $$s(k) = \sqrt{\frac{1}{N-1}\sum_{n=0}^{N-1}(x(k-n) - m(k-n))^2}$$

   f3) on calcule la valeur d'hystérésis à un instant k en fonction de l'écart-type s ( k ) calculé à cet instant.

5. Procédé suivant l'une des revendications précédentes,
   dans lequel le stade c) de l'émission de l'une de deux valeurs de réglage pouvant être prescrites comprend les stades partiels suivantes :

   c21) on calcule une première valeur ( 66 ) de seuil, qui correspond à la valeur ( 60 ) de consigne augmentée d'une valeur ( h ) déterminée à l'avance, et une deuxième valeur ( 68 ) de seuil, qui correspond à la valeur ( 60 ) de consigne diminuée de la valeur ( h ) déterminée à l'avance ;
   c22) on adapte les deux valeurs ( 72, 74 ) de réglage pouvant être prescrites, de manière à ce que la courbe en fonction du temps des valeurs ( 62 ) réelles devienne, dans un intervalle ( Z ) de temps prescrit par un nombre d'instants, au moins une fois supérieure à la première valeur ( 66 ) de seuil et au moins une fois inférieure à la deuxième valeur ( 68 ) de seuil.

6. Procédé suivant l'une des revendications précédentes, **caractérisé en ce que** dans le stade c) l'émission de la valeur de réglage à un instant ( 86 ) précédent l'instant de l'émission s'effectue en fonction d'une différence ( 84 ) entre une valeur ( I ) réelle et une valeur ( S ) de consigne.

7. Support de données ayant un code de programme pour le déroulement d'un programme, qui convient en coopération avec une installation de traitement de données à la réalisation d'un procédé suivant l'une des revendications 1 à 6.

8. Unité ( 80 ) de régulation, par laquelle une grandeur physique peut être relevée et peut être mise à disposition en tant que valeur ( I ) réelle sous une forme appropriée à l'exécution d'un procédé de réglage et par laquelle un procédé de réglage peut être réalisé de soi-même, dans laquelle en fonction de valeurs de réglage provenant de la réalisation du procédé de régulation, il peut être produit par l'unité ( 80 ) de régulation une grandeur physique propre à commander une unité de réglage,
   **caractérisée en ce que**, pour une détermination automatique de valeur de paramètre, l'unité ( 80 ) de régulation est conçue pour la mise en ouvre de l'un des procédés suivant l'une des revendications 1 à 6.

EP 2 187 276 B1

FIG 1

FIG 2

14

## FIG 3

## FIG 4

## FIG 5

## FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5453925 A
- US 4549123 A